# EUROPEAN PATENT APPLICATION

(11) **EP 3 323 741 A1**
(43) Date of publication of application: **23.05.2018**
(21) Application number: 16382542.5
(22) Date of filing: 22.11.2016
(51) Int. Cl.: B65B 51/32, B29C 65/02, B29K 101/12

(54) **COOLING DEVICE FOR COOLING SEALS IN A FILM IN A FORM-FILL-SEAL MACHINE**

(71) Applicant: Payper, S.A., 25191 Lleida (ES)
(72) Inventor: JORDÀ BOLDU, Daniel, 25191 LLEIDA (ES); CURCÓ MASIP, Carmelo, 25191 LLEIDA (ES)
(74) Representative: Herrero & Asociados, S.L.

(57) **Abstract**

The invention relates to a cooling device for cooling seals in a film in a form-fill-seal machine, comprising cooling means comprising at least one passage (5) guiding a cooling fluid on to at least one side seal formed in said film (2), said film (2) defining a forward movement direction (A), and characterized in that said at least one passage (5) of said cooling means is arranged substantially in the same forward movement direction (A) of the film (1).

The invention assures that the seals will reach the first transfer roller in a cold enough state so that a seal is not formed between the two faces of the side creases, even at high working speeds.

## Description

The invention present invention relates to a cooling device for cooling seals in a film in a form-fill-seal machine, said seals particularly being formed on the side creases in a film of thermoplastic material unwound from a reel during the processing thereof in a form-fill-seal (FFS) machine.

### Background of the Invention

In these form-fill-seal machines, abbreviated as FFS machines, a bag of a given length is formed from a tubular reel, filled with a bulk product, and the bag is closed or sealed once it is filled. Heat-sealing systems for closing the bag, and more specifically for forming the seals at the bottom of the bag and the seal at the mouth of the bag once it has been filled, are used in machines of this type,.

In machines of this type, in addition to the already mentioned seals, it is also common to form seals on the side creases in a film unwound from the tubular reel, with a device called a corner sealing device, for improving the shape of the bag once it is completed and closed, so that it adopts a parallelepiped shape. In addition to improving the shape and outer appearance of the filled bag, these seals improve the subsequent placement of these bags on pallets, and additionally, they also improve the bag emptying features, because since by forming these seals, there can be no product retained in the gaps that would be formed by the side creases in the eight corners, such that the bags can emptied better when used by the end user.

Patent documents DE 10 2004 034 489 A1 and EP 0 844 175 A contemplate systems for making corner seals of this type, which are typically made in a station located between the film unwinding system and the cutting and sealing station producing the bag. The cutting and sealing station intermittently feeds an amount of film for producing the bag at the desired length, makes the cut separating the bag from the film, and forming the seal at the bottom of the bag. The cut (transverse to the film feed direction) for separating two bags is made such that it splits the previously formed corner seal in two: one part of the seal is part of the mouth of the finished bag, and the other part is part of the bottom of the following bag, as shown in detail in patent document EP 0 844 175 A.

The corner seal is made at least between one of the two faces of the film and the adjacent face of the film forming the side crease, and between the opposite face of the film and the other adjacent face, from one and the same side of the film. It is also common to perform at the same time the operation on the side crease of the other side of the film.

Given the arrangement of the different work stations in form-fill-seal machines of this type, during film processing the film must be redirected and the direction changed when going from one work station to another in the forward movement direction of the film. These changes in direction are usually performed by means of the use of idler rollers, arranged transverse to the forward movement direction thereof, exerting pressure on the tubular film being moved forward and changing direction as needed.

A typical problem due to use of this system for moving the film forward between different stations until reaching the cutting and sealing station is that if the corner seal is still hot and is passed through the transfer rollers of the tubular film before it cools down, the contact pressure of the rollers on the film can seal the side creases of one and the same side of the film to one another by the inner face thereof (outer face of the film).

This seal of the side creases of one and the same side is entirely unwanted since it causes film processing problems in subsequent work stations, such as the bag fill station, since this unwanted seal limits the volumetric capacity of the bag. This phenomenon is worsened as the working speed of the machine increases since there is increasingly less time to allow the film to cool before the corner seal reaches the first transfer roller, such that it is impossible to assure after certain working speeds that there would not be the start of a seal being formed between the inner faces of the side creases when the film with the corner seal passes through the first transfer roller.

Patent document DE 10 2013 105 549 B3 describes a system for cooling these seals, with a device blowing air in a direction transverse to the forward movement of the film, focusing the cooling fluid or air on the inner face of the side creases. However, this cooling is only done in an isolated location due to the transverse arrangement, so the cooling may not be effective depending on the working speed.

Therefore, the purpose of the present invention is to provide a cooling device for cooling a corner seal, arranged after the seal forming station, such that it can be assured that these seals will reach the first transfer roller in a cold enough state so that a seal is not formed between the two faces of the side creases, even at high working speeds.

### Description of the Invention

The cooling device of the invention solves the aforementioned drawbacks and has other advantages that will be described below.

The cooling device for cooling seals in a film in a form-fill-seal machine according to the present invention comprises cooling means comprising at least one passage guiding a cooling fluid on to at least one side seal formed in said film, said film defining a forward movement direction, and characterized in that said at least one passage of said cooling means is arranged substantially in the same forward movement direction of the film.

It should be indicated that substantially in the same direction means that it is parallel to same or forms an angle with same less than or equal to 15°.

Advantageously, said cooling means comprise two cooling fluid guiding passages, both arranged in the same forward movement direction of said film and each one cooling a side seal.

Furthermore, said cooling means guide the cooling fluid on to said at least one seal during the movement of said film and/or during the stopping of the film.

For example, said cooling fluid can be air generated by a fan or air generated by means of compressed air.

Preferably, said cooling fluid is cooled below room temperature before being blown through said at least one passage.

Accordingly, according to the present invention, the seals are cooled by means of one or more passages arranged in the same forward movement direction of the film, through which the film with the seals already formed is passed, whereas, in the same direction, or in the opposite direction, an air stream generated by at least one fan or compressor and which can be at a temperature lower than room temperature is circulated through the same passages.

The advantage of the device according to the present invention is that the seals can be cooled not only while the film moves forward intermittently between the corner seal station to the first transfer roller, but also while the film is stopped as the different operations are performed on same (for example, corner seal, punching, cutting and sealing, etc.).

The fact that the cooling air stream is in the same direction or opposite the forward movement direction of the film, and that cooling is performed throughout the entire work cycle of the form-fill-seal machine, both in the intermittent film forward movement phase and while the film is stopped, allows assuring that the seals are cold enough when they come into contact with the first transfer roller, even at high working speeds, preventing the sealing of the inner faces of the side creases of the film.

### Brief Description of the Drawings

To better understand the preceding description, a set of drawings is attached in which a practical embodiment is schematically depicted by way of non-limiting example.
Figure 1 is a perspective view of a portion of a form-fill-seal machine, comprising the cooling device according to the present invention; and
Figure 2 is a perspective view of the cooling device according to the present invention in a form-fill-seal machine.

### Description of a Preferred Embodiment

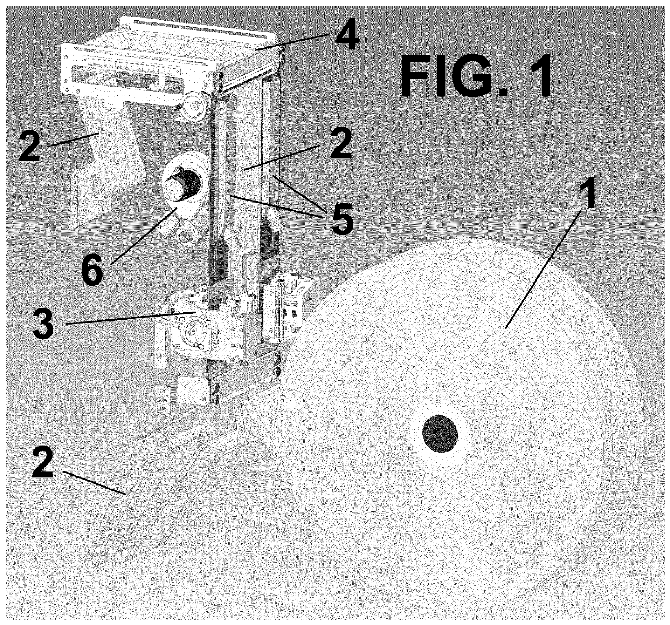

Figure 1 shows part of a form-fill-seal machine, particularly a reel 1 of film 2 of thermoplastic material, for example.

Said film 2 is what will form the bags (not depicted in the drawings) and is formed by two layers, one on top of the other, and two side creases.

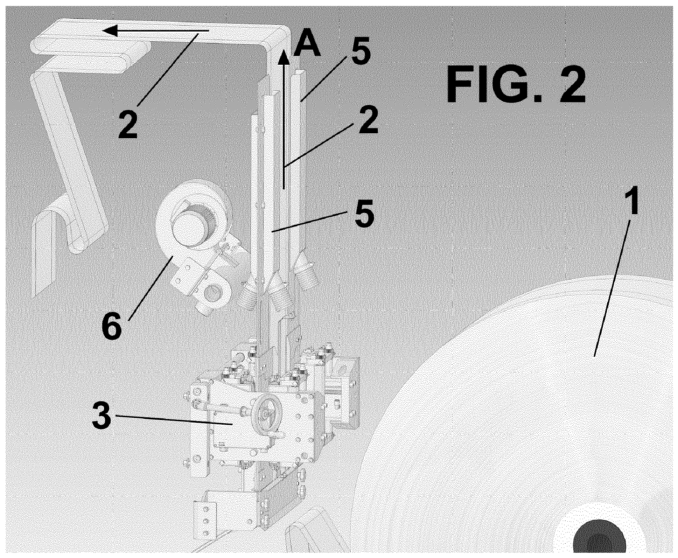

The film 2 is unwound from said reel 1 and moves defining a forward movement direction (indicated by means of the arrow A in Figure 2), and it passes through a sealing station 3 in which said side creases are sealed, forming side seals on said film 2.

The form-fill-seal machine also comprises a first transfer roller 4 for changing the direction of said film 2 after sealing the side creases, as is conventional in form-fill-seal machines.

According to the present invention, the form-fill-seal machine also comprises a cooling device for cooling said side seals, said cooling device being located between the sealing station 3 and the first transfer roller 4, specifically after the sealing station 3 and before the first transfer roller 4.

According to the depicted embodiment, the cooling device comprises two passages 5 for guiding a cooling fluid, although it would also be possible to use a different number of passages 5, for example, one, or also more than two.

As can be seen in the drawings, said passages 5 are arranged substantially in the same direction as the forward movement direction A of said film 2, i.e., in a direction substantially parallel to the longitudinal axis of the film 2. It should be indicated that substantially in a direction substantially parallel or substantially in the same direction mean that it can define an angle less than or equal to 15°.

Advantageously, said passages 5 are arranged right above the side seals of the film, such that the cooling fluid directly strikes these seals for cooling them before the film reaches the first transfer roller 4.

The cooling fluid is preferably air, which can be chilled, generated from a fan 6 or compressor or any suitable air generator.

It should be indicated that the cooling fluid can move inside the passages 5 in the same direction of movement as the film 2 or in the opposite direction, or in one direction in one of the passages 5 and in the opposite direction in the other passage 5.

It should also be indicated that cooling by means of the device according to the present invention is performed during the movement of said film 2 and/or during the periods of stopping said film 2, according to whichever is suitable for assuring that the seals are cold enough when they reach the first transfer roller 4, depending on the travelling speed of the film 2.

Although reference has been made to a specific embodiment of the invention, it is obvious for a person skilled in the art that the described cooling device is susceptible to a number of variations and modifications and that all the mentioned details can be replaced with other technically equivalent ones without departing from the scope of protection defined by the attached claims.

## Claims

1. Cooling device for cooling seals in a film in a form-fill-seal machine, comprising cooling means comprising at least one passage (5) guiding a cooling fluid on to at least one side seal formed in said film (2), said film (2) defining a forward movement direction (A), **characterized in that** said at least one passage (5) for said cooling means is arranged substantially in the same forward movement direction (A) of the film (1).

2. Cooling device for cooling seals in a film in a form-fill-seal machine according to claim 1, wherein said cooling means comprise two cooling fluid guiding passages (5), both arranged in the same forward movement direction (A) of said film and each one cooling a side seal.

3. Cooling device for cooling seals in a film in a form-fill-seal machine according to claim 1 or 2, wherein said cooling means also guide the cooling fluid on to said at least one side seal during the movement of said film (2) and/or during the stopping of the film (2).

4. Cooling device for cooling seals in a film in a form-fill-seal machine according to any one of the preceding claims, wherein said cooling fluid is air generated by a fan (6).

5. Cooling device for cooling seals in a film in a form-fill-seal machine according to any one of the preceding claims, wherein said cooling fluid is air generated by means of compressed air.

6. Cooling device for cooling seals in a film in a form-fill-seal machine according to any one of the preceding claims, wherein said cooling fluid is cooled below room temperature before being blown through said at least one passage (5).
